# EUROPÄISCHE PATENTSCHRIFT

(11) **EP 0 304 733 B1**
(45) Veröffentlichungstag und Bekanntmachung des Hinweises auf die Patenterteilung: **10.02.1993**
(21) Anmeldenummer: 88113065.2
(22) Anmeldetag: 11.08.1988
(51) Int. Cl.: H04L 9/00, G08B 29/00

(54) **Datenübertragungsverfahren**
Data-transmission method
Procédé de transmission de données

(30) Priorität: 14.08.1987 DE 3727222
(43) Veröffentlichungstag der Anmeldung: 01.03.1989
(73) Patentinhaber: SIEMENS AKTIENGESELLSCHAFT, 80333 München (DE)
(72) Erfinder: Schreyer, Karlheinz, Dipl.-Ing. FH, D-8190 Wolfratshausen (DE); Kersten, Annette, Dipl.-Math., D-8000 München 82 (DE); Beutelspacher, Albrecht, Prof. Dr., D-8012 Ottobrunn (DE); Wonisch, Erich, Dipl.-Ing., D-8190 Wolfratshausen (DE)

(56) Entgegenhaltungen:
- DE-A- 2 064 858
- DE-A- 2 335 430
- DE-A- 3 410 937
- US-A- 3 735 353
- IEEE ELECTRONICS AND AEROSPACE SYSTEMS CONVENTION, Arlington, VA, 25.-27. September 1978, Band 3, Seiten 661-662, IEEE, New York, US; G.J. SIMMONS: "Message authentication without secrecy: a secure communications problem uniquely solvable by asymmetric encryption techniques"

## Beschreibung

Die Erfindung bezieht sich auf ein Datenübertragungsverfahren mittels Authentifikation in einem Übertragungsnetzwerk einer Einbruchmeldeanlage mit einer Hauptstation und mehreren Unterstationen.

In Einbruchmeldeanlagen wurden bisher zur Erzielung einer äußerst hohen Sabotagesicherheit die sabotagegefährdeten Leitungen entweder in Panzerrohren, unter Putz oder in druckluftgefüllten Rohren verlegt. Oder sie wurden durch kapazitive Systeme sabotageüberwacht. Außerdem wurden sämtliche Verteiler und Melder mit Deckelkontakten ausgestattet. Das hat jedoch den Nachteil, daß ein hoher, sich durch die gesamte Peripherie ziehender Verdrahtungsaufwand die Folge war. Zudem sind zusätzliche Sabotagelinien, die für die eigentliche Objektüberwachung keinen Beitrag leisten, erforderlich. Dies alles bewirkt auch noch ein Aufblähen der Zentrale.

Es ist bekannt, zur Sicherung nicht manipulierbarer Datenübertragung zwischen verschiedenen Teilnehmern,z.B. einer Hauptstation und mehrerer Unterstationen, eine kryptografische Datensicherung vorzunehmen. So ist beispielsweise in der DE-A-2 064 858 eine Anordnung zur Alarmauslösung in einer Bewachungseinheit eines Bewachungsgerätes, bei dem eine zentrale Bewachungseinheit ein Kontrollsignal durch eine Schleife zu einer Anzahl zu bewachender Objekte aussendet, die mit der Bewachungseinheit in Reihe verbunden sind, beschrieben. Bei unerlaubter Manipulation mit der Schleife, z.B. bei einem Versuch, eines oder mehrere der zu bewachenden Objekte zu umgehen, wird Alarm ausgelöst. Dabei ist das Kontrollsignal von Impulsfolgen gebildet, die von einem Zufallsgenerator in der Bewachungseinheit erzeugt werden. In den zu überwachenden Objekten wird die Impulsfolge von einem jeweiligen Generator mit einem vorher bekannten Impulsmuster beeinflußt. Das von der Bewachungseinheit C ausgesandte Kontrollsignal wird also in definierter Weise codiert und in der zentralen Bewachungseinheit beim Wiedereintreffen dahingehend überwacht, ob das Kontrollsignal die jeweils richtige Codierung aufweist und nicht manipuliert wurde. Eine Datenübertragung mit Aufforderungs-, Befehls- und Meldedaten, die in besonderer Weise zu verschlüsseln sind, ist dort nicht vorgesehen.

Da derartige Verfahren dennoch überlistet werden können, wurde in IEEE Electronics and Aerospace Systems Convention, Arlington, VA, 25-27 September 1978, Band 3, Seiten 661-662, IEEE, New York, US: G.J. Simmons: "Message authentication without secrecy: a secure communications problem uniquely solvable by asymmetric encryption techniques" vorgeschlagen, zu sichernde Daten in einer Kryptostufe dahingehend zu verschlüsseln, daß sie einen Klartext und einen angefügten Authentikator aufweisen. Die Empfangsstation erkennt die Authentität der Daten, wenn der Authentikator richtig ist. Dabei überprüft jede Station den empfangenen Authentikator aufgrund der geheimen und gespeicherten Schlüssel. Die Kryptostufe jeder Station verschlüsselt erneut und sendet das Datentelegramm mit dem angefügten neuen Authentikator ab. Zusätzliche Maßnahmen zur Erhöhung der Sabotagesicherheit sind dort nicht weiter beschrieben.

Aufgabe der Erfindung ist es daher, ein sabotagesicheres Verfahren zum Übertragen von Meldungen und Befehlen innerhalb von Einbruchmeldeanlagen an hilfeleistende Stellen anzugeben, welches durch Manipulation und gezielte Eingriffe nicht überlistet werden kann. Dabei soll ein bekanntes Verfahren in einem Gefahrenmeldenetzwerk weitergebildet werden.

Diese Aufgabe wird in einem obengenannten Datenübertragungsverfahren mit den Merkmalen nach Anspruch 1 gelöst.

Bei dem erfindungsgemäßen Datenübertragungsverfahren wird jede zu sichernde Meldung im Klartext gesendet und mit einem Authentikator (Prüfwort) versehen, der über ein kryptografisches Verfahren gewonnen wurde. Diese quasi elektronische Unterschrift wird im Empfänger auf Echtheit geprüft. Dabei wird jeweils nur verschlüsselt, aber nie entschlüsselt. Mit diesem Verfahren ist es einem Saboteur unmöglich, selbst wenn er den Datenkanal vor sich hat, eine unerkannte Manipulation durchzuführen, die eine Alarmgabe verhindert. In der Kryptostufe wird ein Krypto-Algorithmus mit "One-Way-Function" verwendet, mit dem also nur Ver- aber nicht Entschlüsseln möglich ist. Dies hat den Vorteil, daß ein Dechiffrieren der verschlüsselten Nachricht nahezu unmöglich ist. Dabei können bei gleichbleibendem Meldungsinhalt (Telegramminhalt) die dazugehörigen Authentikatoren geändert werden, weil der Telegramminhalt vor der Bildung des Authentikators mit dem Inhalt eines Zählers, der in regelmäßigen Zeitabständen weitergeschaltet wird, logisch verknüpft wird.

In einer vorteilhaften Weiterbildung der Erfindung werden in regelmäßigen Zeitabständen von der Hauptstation aus die Zähler weitergeschaltet. Dabei wird mit einem ersten Befehl, der mit einem Authentikator versehen ist, jeder Zähler vorbereitet und erst mit einem zweiten authentifizierten Befehl, der erst gesendet wird, wenn sämtliche Unterstationen den ersten Befehl unverfälscht empfangen haben, wird jeder Zähler weitergeschaltet. Das hat den Vorteil, daß die Zähler auch bei Störungen in der Übertragung nicht auseinanderlaufen können, denn die Zählerweiterschaltung in zwei Schritten mit Rückmeldung sichert ein synchrones Weiterschalten der Zähler.

Weitere Einzelheiten und Vorteile der Erfindung ergeben sich aus den Unteransprüchen und werden anhand der Zeichnung im folgenden erläutert. Dabei zeigen
Fig. 1 eine schematische Darstellung der Authentifikation,
Fig. 2 ein Beispiel der erfindungsgemäßen Datensicherung und
Fig. 3 eine prinzipielle Darstellung einer Meldeschleife in einer Einbruchmeldeanlage.

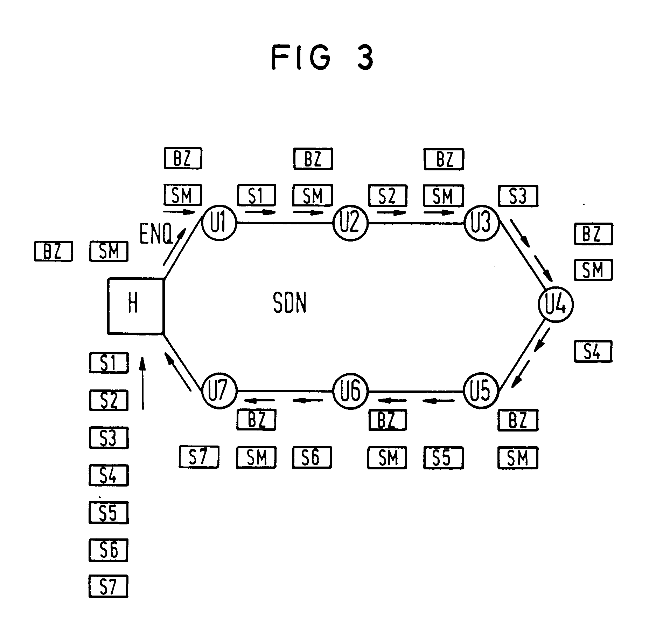

In einem Datenübertragungsnetz einer Einbruchmeldeanlage, einem Gefahrenmeldenetzwerk, z.B. in einem sogenannten Sicherheits-Dialog-Netzwerk (SDN), wie es in Fig.3 gezeigt und später noch erläutert wird, muß die Meldefähigkeit der Teilnehmer (Hauptstation; Unterstationen) sichergestellt sein. Es gilt nicht nur den Ausfall einer Station zu melden, sondern auch eine geschickt angelegte Sabotage zu erkennen, damit rechtzeitig eine Gegenmaßnahme eingeleitet werden kann.

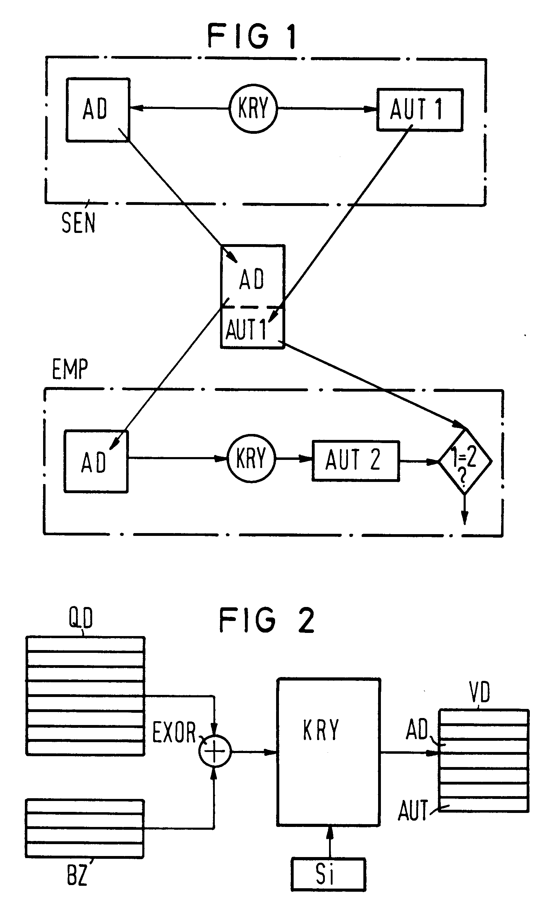

Da die Daten in einem solchen Sicherheits-Dialog-Netzwerk nicht geheim sein müssen, wird auf eine verschlüsselte Übertragung verzichtet. Stattdessen wird aus den Ausgangsdaten (AD) nach einem kryptografischen Verfahren (KRY) mit einem geheimen Schlüssel (Si) ein Authentikator (Prüfwort) AUT1 erzeugt und mit ihnen ausgesendet. Dies ist in der Fig.1 schematisch gezeigt. Im Sender SEN wird dies vorgenommen. Die Ausgangsdaten AD werden mit dem zugefügten Authentikator AUT1 zum Empfänger EMP übertragen. Der Empfänger EMP verifiziert dieses Wort und stellt damit die Authentität der Information fest. Im Empfänger EMP wird aus den empfangenen Ausgangsdaten AD mit dem bekannten Geheimschlüssel (Si) durch Verschlüsseln der Authentikator AUT2 gewonnen. Dieser wird mit dem mitübertragenen Authentikator AUT1 verglichen. Bei Übereinstimmung werden die Daten weiter übertragen oder es wird von einer Unterstation eine eigene Meldung gesendet. Dieses Authentifikationsverfahren garantiert, daß jede mutwillige oder zufällige Änderung der Information vom Empfänger bemerkt wird, so daß entsprechende Maßnahmen eingeleitet werden können.

Bei dem erfindungsgemäßen Verfahren gemäß der Fig.2 wird der Authentikator mittels einer Verschlüsselung aus den Quellendaten QUD, die z.B. aus einem 5-Bytes-langen Telegramm im Klartext und drei hinzugefügten Leerbits bestehen, und einem Binärzähler BZ gewonnen, der beispielsweise 32-stufig sein kann. Zuerst werden die Daten aus dem Klartext QUD mit den Daten des Binärzählers BZ logisch verknüpft und dann in der Kryptostufe KPY mit einem Geheimschlüssel Si verschlüsselt und als "verschlüsselte", d.h. authentifizierte Daten VD gesendet.

In diesem Ausführungsbeispiel werden die ersten vier Bytes der Quellendaten QUD mit einem 4-byte-langen Binärzählerinhalt exclusiv geodert (EXOR). Da der Binärzähler BZ regelmäßig weitergeschaltet wird, stehen vor der Kryptostufe KRY trotz möglicherweise gleicher Nutztelegramme (QUD) immer neue Bytefolgen bereit, die über an sich bekannte Algorithmen zu einem 8-byte-langen Datentelegramm (Geheimtext) verschlüsselt (VD) werden.

In Fig. 3 ist schematisch eine ringförmige Meldeschleife in einer Einbruchmeldeanlage dargestellt. Jede Station, die Hauptstation H und die Unterstationen U1 bis U7, besitzt zur Sicherung des Telegramms, das sie aussenden, einen Binärzähler BZ und jeweils einen eigenen Schlüssel SM, S1 bis S7. Die Unterstationen U1 bis U7 können nur den Authentikator der Hauptstation überprüfen. Deshalb ist in jeder Unterstation U1 bis U7 der Schlüssel der Hauptstation, der Masterschlüssel SM, hinterlegt. Die Hauptstation H kann darüberhinaus die Sicherungsworte (Authentikatoren) aller Unterstationen überprüfen. Daher sind in der Hauptstation H auch sämtliche Schlüssel S1 bis S7 der Unterstationen U1 bis U7 hinterlegt. Die Hauptstation und jede Unterstation weist einen Binärzähler BZ auf. Dieser Zähler stellt dabei sicher, daß sich der Authentikator auch dann ändert, wenn das Eingangstelegramm gleich sein sollte. Die Zähler werden beispielsweise alle 30 Sekunden und vorteilhafterweise im Rahmen der Teilnehmerprüfung weitergeschaltet, d.h. sämtliche Unterstationen werden aufgrund einer Kennungsabfrage, die als Befehl von der Hauptstation ausgesendet wird, geprüft, ob sie noch alle angeschlossen und funktionsfähig sind. Die jeweiligen Geheimschlüssel sind in jeder Station unverlierbar beispielsweise in EPROMs hinterlegt.

Die Hauptstation H sendet beispielsweise alle 200 msec ein Abfragezeichen ENQ, das nicht authentifiziert sein muß, als einen Aufforderungsbefehl an alle Unterstationen. Dieses auf die Leitung des Sicherheits-DialogNetzes SND gegebene Zeichen ist für sämtliche Unterstationen die Aufforderung zum Senden und wird von Station zu Station weitergegeben, bis es wieder an der Hauptstation ankommt. Dabei erfolgt die Weitergabe nur, wenn sich die Unterstation in Ruhe befindet. Die Hauptstation erkennt aufgrund dieser regelmäßigen Aufforderung zum Senden und dem Wiederankommen, daß die Leitung in Ordnung ist. Steht bei einer der Unterstationen ein Alarm an, so gibt diese Unterstation aufgrund des Aufforderungssignals zum Senden die Alarmmeldung auf die Leitung, d.h. zur nächsten Station, und von dort weiter bis zur Hauptstation. Dabei wird die Alarmmeldung von der betreffenden Unterstation mit dem geheimen Schlüssel dieser Unterstation verschlüsselt, also authentifiziert.

Um das Netz auf Vollständigkeit zu prüfen, werden in regelmäßigen Abständen authentifizierte Signale auf die Leitung gegeben, die die Unterstationen aufrufen, ihre spezifischen Kennungen an die Hauptstation zu schicken. Diese Kennungsabfrage KA kann alle dreißig Sekunden erfolgen. Dabei ist sowohl der Aufruf als auch die Antwort der Stationen durch einen Authentikator gesichert.

Es ist äußerst zweckmäßig, diese Kennungsabfrage KA mit der Weiterschaltung der Zähler zu verbinden. Dabei trägt die Unterstation auf die Kennungsabfrage hin, die sie beantwortet, beispielsweise in eine Hilfszelle den um eins erhöhten Zählerstand ein. Sobald die Hauptstation die letzte Antwort auf die Kennungsabfrage KA empfangen hat, gibt sie einen Übernahmebefehl in das Sicherheitsdialognetz, so daß jede Unterstation den Inhalt der Hilfszelle in ihren Binärzähler laden kann. Dieser zweite Befehl (authentifizierter Ubernahmebefehl) wird ähnlich wie der Senden-Aufforderungsbefehl ENQ von Station zu Station weitergereicht. Die Hauptstation erhält diesen zweiten Befehl ebenfalls zurück und kann daraus sicher schließen, daß alle Stationen den neuen Zählerstand geladen haben. Da die Hauptstation diesen zweiten Befehl erst startet, nachdem die Kennungsabfrage beendet worden ist, kann sie die Kennungsabfrage mehrmals wiederholen, wenn der erste Befehl quasi als Quittung nicht korrekt in der Hauptstation wieder angekommen ist. Jede Unterstation antwortet dann immer mit dem alten Zählerstand. Bei gestörtem Übernahmebefehl gilt das gleiche, da die Zähler mehrmals mit dem Inhalt der Hilfszelle geladen werden können. Mit diesem Verfahren ist sichergestellt, daß sämtliche Zähler synchron laufen.

In einer Einbruchmeldeanlage wird mit diesem erfindungsgemäßen Verfahren, d.h. mit Authentikation, folgendes erreicht. Folgende Befehle von der Hauptstation an die Unterstationen sind dadurch sabotagesicher: Das Scharf- und Unscharfschalten der einzelnen Stationen, das Ein- und Ausschalten der Linie und ein für den Wartungsdienst vorbehaltenes Rücksetzen der Zähler. Ebenfalls mit einem Authentikator versehen sind folgende Meldungen der Unterstationen an die Hauptstation. Alarm-, Störungsmeldung; Scharf- und Unscharfschalten und Linie ein- und ausschalten. Sie zirkulieren einmal im SicherheitsDialog-Netzwerk. Dabei wird der Authentikator, den die Unterstation ihrer Meldung mitgegeben hat, beim Passieren der Hauptstation durch den Authentikator der Hauptstation ersetzt, d.h. sie nimmt das empfangene Telegramm und authentifiziert es nach dem obengenannten Verfahren. Da sie aber seinen Schlüssel und nicht den der sendenden Unterstationen einbringt, entsteht wieder ein neues Sicherungswort. Die meldenden Unterstationen erwarten in ihrem Telegramm den Authentikator der Hauptstation zurück. Erhält die eine Meldung abgebende Unterstation den Authentikator der Hauptstation nicht, so wiederholt sie die Meldung regelmäßig und antwortet nicht mehr auf eine Kennungsabfrage. Somit können Alarmmeldungen weder manipuliert noch unerkannt ausgekoppelt werden.

## Patentansprüche

1. Datenübertragungsverfahren mittels Authentifikation in einem Übertragungsnetzwerk (SPN) einer Einbruchmeldeanlage (EMA) mit einer Hauptstation (H) und mehreren daran angeschlossenen Unterstationen (U1 bis Un), bei dem von der Hauptstation (H) Aufforderungs- bzw. Befehlsdaten an die Unterstationen (U1 bis Un) und Meldedaten von den einzelnen Unterstationen (U1 bis Un) an die Hauptstation (H) übertragen werden, wobei jede Station (H; U1 bis Un) eine Kryptostufe (KRY) und zumindest einen gespeicherten geheimen Schlüssel (SM; Si) aufweist, gekennzeichnet durch folgende Merkmale:
a) die jeweils zu sichernden Daten (Quellendaten QUD) werden jeweils mit den Zählerdaten eines Binär-Zählers (BZ) logisch verknüpft und anschließend in der Kryptostufe (KRY) verschlüsselt, wobei die authentifizierten Daten (VD) einen Klartext (AD) und einen angefügten Authentikator (AUT1) aufweisen;
b) die empfangenen authentifizierten Daten (VD) werden in jeder Station (H; U1 bis Un) auf ihre Authentität überprüft, indem aus dem Klartext (AD) und dem geheimen Schlüssel (MS; Si) der Authentikator (AUT2) ermittelt und mit dem übertragenen Authentikator (AUT1) verglichen wird,
c) in regelmäßigen Zeitabständen werden von der Hauptstation (H) aus die Binärzähler (BZ) weitergeschaltet, wobei mit einem ersten, durch die Authentifikation gesicherten Befehl jeder Zähler (BZ) vorbereitet wird und mit einem zweiten authentifizierten Befehl, der erst gesendet wird, wenn sämtliche Unterstationen (U1 bis Un) den ersten Befehl unverfälscht empfangen haben, jeder Zähler weitergeschaltet wird.

2. Datenübertragungsverfahren nach Anspruch 1 oder 2, **dadurch gekennzeichnet,** daß die von der Hauptstation zu sichernden Daten (QUD) jeweils mit einem Masterschlüssel (MS) authentifiziert werden, der auch in jeder Unterstation (U1 bis Un) gespeichert und zur Authentitätsprüfung dient.

3. Datenübertragungsverfahren nach Anspruch 3, **dadurch gekennzeichnet,** daß jede Unterstation (U1 bis Un) zusätzlich einen eigenen Geheimschlüssel (S1 bis Sn) aufweist, mit dem die Daten von der jeweiligen Unterstation verschlüsselt werden, und daß in der Hauptstation (H) sämtliche Geheimschlüssel (S1 bis Sn), die zur Authentitätsprüfung dienen, gespeichert sind.

4. Datenübertragungsverfahren nach einem der vorhergehenden Ansprüche, **dadurch gekennzeichnet,** daß die Hauptstation (H) regelmäßig eine nichtgesicherte Sendeaufforderung (ENQ) an die einzelnen Unterstationen (U1 bis Un) sendet, damit diese jeweils ihren Zustand an die Hauptstation (H) senden, wobei bei Ruhe dieses Aufforderungssignal lediglich von Station zu Station weitergegeben und wieder zur Hauptstation zurückgegeben wird, die bei Ausbleiben eine Störung erkennt, und daß bei Alarm die alarmgebende Unterstation (U1 bis Un) ihre Meldung mit dem eigenen Geheimschlüssel (S1 bis Sn) authentifiziert und zur Hauptstation sendet.

5. Datenübertragungsverfahren nach einem der Ansprüche 1 bis 4, **dadurch gekennzeichnet,** daß die Hauptstation (H) in regelmäßigen Zeitabständen eine authentifizierte Kennungsaufforderung (KA) an die einzelnen Unterstationen (U1 bis Un) sendet, wobei jede Unterstation ihre Antwort mit dem eigenen Geheimschlüssel (S1 bis Sn) authentifiziert.

6. Datenübertragungsverfahren nach Anspruch 2 und 6, **dadurch gekennzeichnet,** daß mit der Kennungsaufforderung (KA) an die Unterstationen (U1 bis Un) das Weiterschalten der Binärzähler (BZ) kombiniert ist, wobei die Kennungsaufforderung (KA) gleichzeitig der erste Befehl zum Vorbereiten des Zählers ist, wodurch in jeder Unterstation mit der Antwort auf die Kennungsabfrage der um eins erhöhte Zählerstand beispielsweise in einer Hilfszelle gespeichert wird und mit dem zweiten Befehl von der Hauptstation (H) in den Binärzähler (BZ) übernommen wird.

7. Datenübertragungsverfahren nach einem der vorhergehenden Ansprüche, **dadurch gekennzeichnet**, daß im Gefahrenmeldenetzwerk der Einbruchmeldeanlage die Unterstationen (U1 bis Un) über eine vorzugsweise 2-adrige Ringleitung an der Hauptstation (H) angeschlossen sind, wobei die Daten nur in einer Richtung übertragen werden.

## Claims

1. Data transmission method by means of authentication in a transmission network (SPN) of an intruder alarm system (EMA) having a main station (H) and a plurality of substations (U1 to Un) connected thereto, in which request or command data are transmitted from the main station (H) to the substations (U1 to Un) and alarm data are transmitted from the individual substations (U1 to Un) to the main station (H), each station (H; U1 to Un) having a cryptographic stage (KRY) and at least one stored secret key (SM; Si), characterised by the following features:
a) the data (source data QUD) to be secured in each case are logically combined with the counter data of a binary counter (BZ) in each case and subsequently encrypted in the cryptographic stage (KRY), the authenticated data (VD) having a plain-language text (AD) and an appended authenticator (AUT1);
b) the authenticity of the received authenticated data (VD) is verified in each station (H; U1 to Un), in that the authenticator (AUT2) is determined from the plain-language text (AD) and the secret key (MS; Si) and compared with the transmitted authenticator (AUT1);
c) the binary counters (BZ) are incremented at regular intervals from the main station (H), each counter (BZ) being prepared with a first command secured by the authentication, and each counter being incremented with a second authenticated command which is only sent once all the substations (U1 to Un) have received the first command without corruption.

2. Data transmission method according to Claim 1, characterised in that the data (QUD) to be secured by the main station are authenticated using a master key (MS) in each case, which is also stored in each substation (U1 to Un) and serves for authentication.

3. Data transmission method according to Claim 3, characterised in that each substation (U1 to Un) additionally has its own secret key (S1 to Sn) with which the data are encrypted by the respective substation, and in that all the secret keys (S1 to Sn) used for authentication are stored in the main station (H).

4. Data transmission method according to one of the preceding claims, characterised in that the main station (H) regularly sends a non-secured transmit request (ENQ) to the individual substations (U1 to Un) so that the latter send their status to the main station (H) in each case, in the event of quiescence said request signal merely being forwarded from station to station and returned to the main station again, which detects a malfunction in the event of the non-appearance thereof, and in that in the event of an alarm, the alarm-signalling substation (U1 to Un) authenticates its message with its own secret key (S1 to Sn) and sends it to the main station.

5. Data transmission system according to one of Claims 1 to 4, characterised in that the main station (H) sends an authenticated code request (KA) at regular intervals to the individual substations (U1 to Un), each substation authenticating its response with its own secret key (S1 to Sn).

6. Data transmission method according to Claim 2 and 6, characterised in that the incrementing of the binary counters (BZ) is combined with the code request (KA) to the substations (U1 to Un), the code request (KA) simultaneously being the first command for preparation of the counter, as a result of which the counter reading incremented by one is stored, in an auxiliary cell for example, in each substation with the response to the code interrogation and is transferred with the second command from the main station (H) into the binary counter (BZ).

7. Data transmission method according to one of the preceding claims, characterised in that in the alarm signalling network of the intruder alarm system the substations (U1 to Un) are connected via a, preferably 2-wire, ring line to the main station (H), the data being transmitted in one direction only.

## Revendications

1. Procédé de transmission de données au moyen d'une authentification dans un réseau de transmission (SPN) d'une installation d'avertissement d'effraction (EMA) comportant un poste principal (H) et plusieurs postes secondaires (U1 à Un), qui y sont raccordés, selon lequel des données de demande ou d'instruction sont transmises par le poste central aux postes secondaires (U1 à Un) et des données de signalisation sont transmises par les postes secondaires individuels (U1 à Un) au poste principal (H), chaque poste (H; U1 à Un) comportant un étage cryptographique (KRY) et au moins un code secret mémorisé (SM; Si), caractérisé par les particularités suivantes :
a) les données devant être respectivement protégées (données source QUD) sont respectivement combinées logiquement aux données d'un compteur binaire (BZ) et sont ensuite codées dans l'étage cryptographique (KRY), les données authentifiées (VD) possédant un texte clair (AD) et un élément d'authentification ajouté (AUT1);
b) l'authenticité des données authentifiées reçues (VD) sont contrôlées dans chaque poste (H; U1 à Un), par le fait que l'élément d'authentification (AUT2) est déterminé à partir du texte clair (AD) et du code secret (MS; Si) et est comparé à l'élément d'authentification transmis (AUT1),
c) à des intervalles réguliers, le poste principal (H) fait avancer les compteurs binaires (BZ), auquel cas chaque compteur (BZ) est préparé au moyen d'une première instruction protégée par l'authentification, et une seconde instruction authentifiée, qui est émise uniquement lorsque tous les postes secondaires (U1 à Un) ont reçu la première instruction non altérée, fait avancer chaque compteur.

2. Procédé de transmission de données suivant la revendication 1 ou 2, caractérisé par le fait que les données (QUD), qui doivent être protégées par le poste principal, sont authentifiées respectivement avec un code maître (MS), qui est également mémorisé dans chaque poste secondaire (U1 à Un) et sert à réaliser le contrôle d'authentification.

3. Procédé de transmission de données suivant la revendication 2, caractérisé par le fait que chaque poste secondaire (U1 à Un) comporte en supplément un code secret propre (S1 à Sn), au moyen duquel les données sont codées par le poste secondaire respectif, et que tous les codes secrets (S1 à Sn), qui sont utilisés pour le contrôle d'authentification, sont mémorisés dans le poste principal (H).

4. Procédé de transmission de données suivant l'une des revendications précédentes, caractérisé par le fait que le poste principal (H) envoie régulièrement une demande d'émission non protégée (ENQ) aux différents postes secondaires (U1 à Un) afin que ces derniers envoient respectivement leur état au poste principal (H), auquel cas, lorsque ce signal de demande est arrêté, la retransmission s'effectue uniquement d'un poste à l'autre et l'émission en retour est à nouveau effectuée au poste principal, qui, en cas de défaillance, identifie une perturbation, et que dans le cas d'une alarme, le poste secondaire (U1 à Un) délivrant l'alarme authentifie sa signalisation avec le code secret proprement dit (S1 à Sn) et l'envoie au poste principal.

5. Procédé de transmission de données suivant l'une des revendications 1 à 4, caractérisé par le fait que le poste principal (H) envoie à des instants réguliers une demande de caractérisation authentifiée (KA) aux différents postes secondaires (U1 à Un), chaque poste secondaire authentifiant sa réponse avec le code secret particulier (S1 à Sn).

6. Procédé de transmission de données suivant les revendications 2 et 6, caractérisé par le fait que l'avance des compteurs binaires (BZ) est combinée à la demande d'identification (KA) présentée aux postes secondaires (U1 à Un), la demande d'identification (KA) constituant simultanément la première instruction pour préparer le compteur, de sorte que dans chaque poste secondaire, l'état de comptage accru de un est mémorisé par exemple dans une cellule auxiliaire, lors de l'apparition de la réponse à la demande d'identification, et est transféré par le poste principal (H) dans le compteur binaire (BZ) lors de l'apparition de la seconde instruction.

7. Procédé de transmission de données suivant l'une des revendications précédentes, caractérisé par le fait que dans le réseau de signalisation de danger de l'installation d'avertissement d'effraction, les postes secondaires (U1 à Un) sont raccordés au poste principal (H) par l'intermédiaire d'un conducteur annulaire de préférence bifilaire, les données étant transmises uniquement dans une direction.
